# EUROPÄISCHE PATENTSCHRIFT

(11) **EP 1 706 308 B1**
(45) Veröffentlichungstag und Bekanntmachung des Hinweises auf die Patenterteilung: **09.05.2007**
(21) Anmeldenummer: 04802957.3
(22) Anmeldetag: 16.12.2004
(51) Int. Cl.: B62D 25/08

(54) **Fahrzeugkarosserie, deren Unterbauchbereich aussteifende Streben zugeordnet sind**
Motor vehicle body whose underbody area is associated with reinforced struts
Carrosserie de véhicule dont le dessous de caisse presente des entretoises de renfort

(30) Priorität: 02.01.2004 DE 102004001060
(43) Veröffentlichungstag der Anmeldung: 04.10.2006
(73) Patentinhaber: Wilhelm Karmann GmbH, 49084 Osnabrück (DE)
(72) Erfinder: VON STOCKHAUSEN-PETERSEN, Helmut, 48477 Hörstel-Riesenbeck (DE); VOLKHAUSEN, Sven, D-33613 Bielefeld (DE)
(86) Internationale Anmeldenummer: PCT/DE2004/002771
(87) Internationale Veröffentlichungsnummer: WO 2005/066011

(56) Entgegenhaltungen:
- EP-A- 0 955 228
- EP-A- 1 104 839
- EP-A- 1 147 970
- EP-A- 1 225 119
- US-A- 2 300 844

## Beschreibung

Die Erfindung betrifft ein Kraftfahrzeug, insbesondere ein Cabriolet-Fahrzeug, mit seinem Unterbodenbereich zugeordneten Streben nach dem Oberbegriff des Anspruchs 1, wie aus dem Dokument EP-A-1 147 970 bekannt ist.

Bei Kraftfahrzeugen stellt sich allgemein das Problem, daß im Fahrbetrieb auftretende äußere Anregungen von Schwingungen, etwa beim Überfahren von Fahrbahnunebenheiten, zum Beispiel Schlaglöchern oder aufwärts ragenden Schwellen, unerwünschte Schwingungen und Verwindungen der Karosserie auslösen können. Dadurch können Fahrsicherheit und -komfort beeinträchtigt und die Fahrzeugstruktur belastet werden. Dieses Problem tritt in besonderem Maß bei Cabriolet-Fahrzeugen mit einer selbsttragenden Karosserie auf, die aufgrund des nicht starren Daches, das vor allem im geöffneten Zustand die Karosserie nicht aussteifen kann, einen Stabilitätsnachteil gegenüber geschlossenen Fahrzeugaufbauten aufweisen. Grundsätzlich stellt es sich jedoch bei allen Fahrzeugen.

Es ist bekannt, der Karosserie im Unterbodenbereich gesonderte, aussteifende Streben zuzuordnen, von denen beispielsweise ein Strebenpaar von in Fahrzeugquerrichtung äußeren Randbereichen vor hinteren Radhäusern bis in einen weiter innen im Nahbereich einer vertikalen Fahrzeuglängsmittelebene liegenden Bereich hintern den hinteren Radhäusern reichen und dort an einer Reserveradwanne festgelegt sein kann. Zunehmend wird jedoch auf Reserveräder verzichtet und statt dessen nur ein Reifendichtmittel mitgeführt. Insbesondere bei Sportwagen ist es häufig gewünscht, im mittleren Bereich wesentliche Teile einer Abgasanlage anzuordnen, um eine insbesondere mehrflutige zentrale Auspuffanlage vorsehen zu können. Bei solchen Fahrzeugen ist jedoch die bisherige Möglichkeit der Strebenfestlegung am Unterboden erschwert oder gar unmöglich.

Der Erfindung liegt das Problem zugrunde, bei einem Kraftfahrzeug die Möglichkeiten der Strebenfestlegung an der Karosserie zu erweitern.

Die Erfindung löst dieses Problem durch ein Kraftfahrzeug mit den Merkmalen des Anspruchs 1. Vorteilhafte Ausgestaltungen des Gegenstandes der Erfindung ergeben sich aus den weiteren Ansprüchen 2 bis 11.

Dadurch, daß erfindungsgemäß dem Unterbodenbereich des Kraftfahrzeugs zumindest eine einen Teil einer Abgasanlage untergreifende Haltebrücke zugeordnet ist, können hieran auch unterhalb von an sich nicht für die Aufnahme von Befestigungsmitteln geeigneten Bereichen Streben festgelegt werden. Damit kann beispielsweise ein mittiger Auspuff vorgesehen werden, ohne daß deswegen die optimale Geometrie der Anordnung von aussteifenden Streben behindert würde.

Beispielsweise kann die Haltebrücke einen im wesentlichen in einer Fahrzeugquermitte angeordneten Endschalldämpfer untergreifen, so daß auch dieser ohne Zusatzaufwand für Umkonstruktionen im üblichen Abstand zu den Auspuffendrohren angeordnet sein kann.

Sofern die Haltebrücke mit einem Vertikalabstand von mehreren Zentimetern unterhalb des untergriffenen Teils der Abgasanlage liegt, können die dort festgelegten Streben beispielsweise horizontal verlaufen und mit ihren vorderen, der Haltebrücke abgewandten Endbereichen direkt am Unterboden anliegen.

Auch ist es mit der Haltebrücke möglich, daß die Streben schwingungsselektiv ausgebildet sind und diesen eine Aufnahmeeinheit zur Erfassung von im Fahrbetrieb auftretenden Längsbeanspruchungen und zumindest ein Stellglied zum Bewirken einer der Längsbeanspruchung entgegenwirkenden Kraft zugeordnet ist, so daß eine aktive Stabilisierung des Fahrzeugs gegen die äußere Schwingungsanregung möglich ist.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:

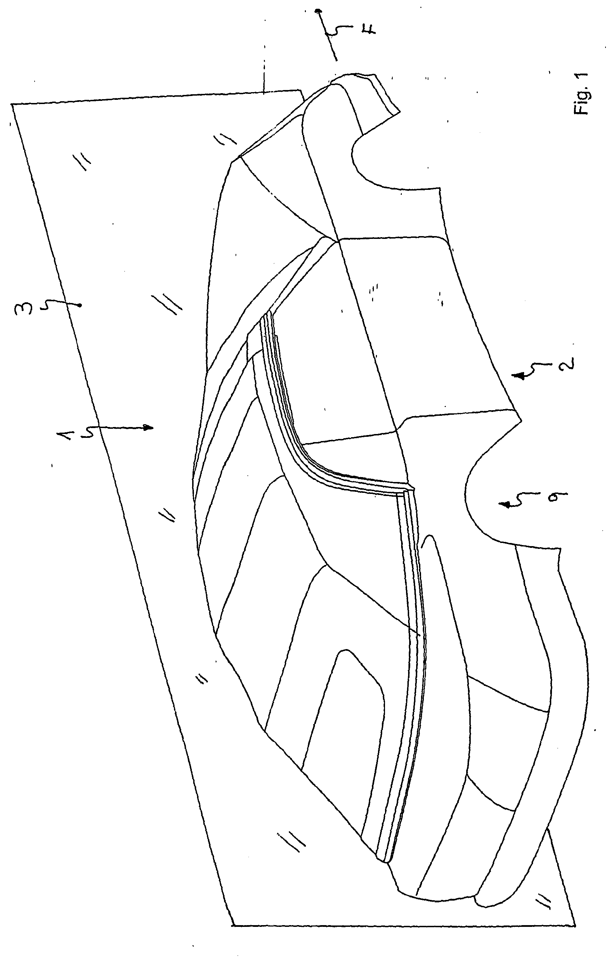

- Fig. 1: eine schematische perspektivische Ansicht eines an seiner vertikalen Längsmittelebene abgebrochen dargestellten erfindungsgemäßen Kraftfahrzeugs,
- Fig. 2: eine schematische Ansicht des Unterbodens des Kraftfahrzeugs nach Fig. 1 mit zumindest zwei an einer gemeinsamen Haltebrücke festgelegten Aussteifungsstreben im hinteren Bereich,
- Fig. 3: eine Einzelteilansicht der in Fig. 2 montierten Haltebrücke,
- Fig. 4: eine Detailansicht von unten der montierten Haltebrücke mit daran festgelegten Streben ohne eingezeichnete Abgasanlage,
- Fig. 5: eine Seitenansicht der einenends an der Haltebrücke und anderenends am Unterboden der Karosserie montierten Streben,
- Fig. 6: eine Ansicht der Haltebrücke mit daran festgelegten Streben von vorne.

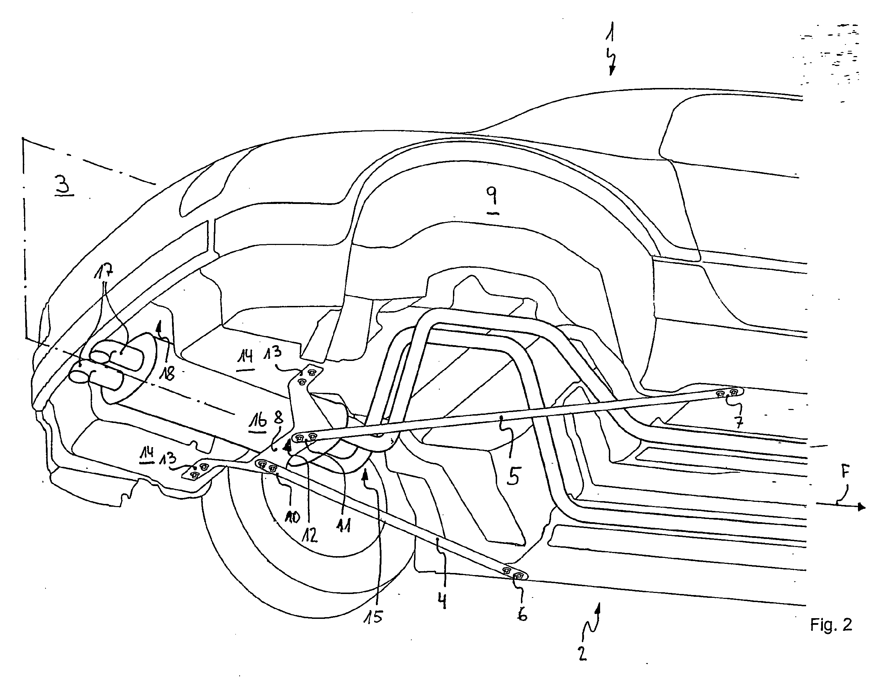

In dem gezeichneten Ausführungsbeispiel nach Figur 2 ist dem Unterboden 2 eines Fahrzeugs 1 - hier eines Cabriolet-Fahrzeugs, was nicht zwingend ist - zumindest im hinteren Bereich ein Paar von symmetrisch zu einer vertikalen Längsmittelebene 3 liegenden Aussteifungsstreben 4, 5 zugeordnet. Zusätzlich können im vorderen Fahrzeugbereich weitere Streben liegen. Die hier gezeigte Anzahl und symmetrische Anordnung von Streben 4, 5 ist nur beispielhaft zu verstehen, ebenso ihr Verlauf.

Die Streben 4, 5 sind hier jeweils mit ihren in Fahrtrichtung F vorderen Enden 6, 7 unmittelbar am Unterboden 2 des Fahrzeugs 1 in dessen äußerem Querrandbereich befestigt. Im vorliegenden Ausführungsbeispiel sind sie mit dem Unterboden 2 lösbar verschraubt, wozu oberhalb des Unterbodens 2 separate und jeweils mit einem Innengewinde versehene Widerlager - nicht gezeichnet - vorgesehen sind. Auch ein vernieten oder Verschweißen kommt in Betracht.

Die Streben 4, 5 erstrecken sich in ihrem Verlauf von ihren vorderen Enden 6, 7 vor den hinteren Radhäusern 9 bis zu hinteren Enden 10, 11, die bezüglich der Fahrtrichtung F hinter den Radhäusern 9 liegen, auf die vertikale Längsmittelebene 3 zu. Die Streben 4, 5 können jeweils als Profile, etwa Rohr- oder Kastenprofile, aus Metall oder etwa auch einem faserverstärkten Kunststoff ausgebildet sein. Im Ausführungsbeispiel finden Rohre mit elliptischem Querschnitt Verwendung, die nur gering schwingen. Bei Inkaufnahme von größeren Schwingungen ist auch die Verwendung von Flacheisen möglich. Die Enden 6, 7, 10, 11 können auch bei Profilstreben 4, 5 flach zusammengepreßt sein, um den Durchgriff von Befestigungsmitteln zu vereinfachen. Die Form der Streben 4, 5 kann von der hier gezeigten Geradlinigkeit erheblich abweichen. Auch etwa abgewinkelte und/oder bereichsweise flächige Bauteile kommen als Streben in Betracht.

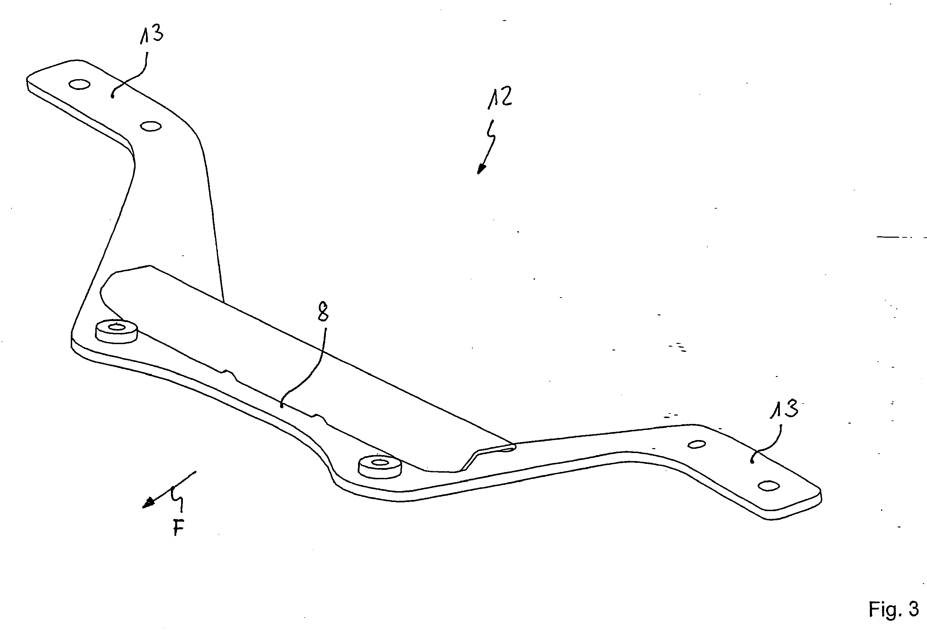

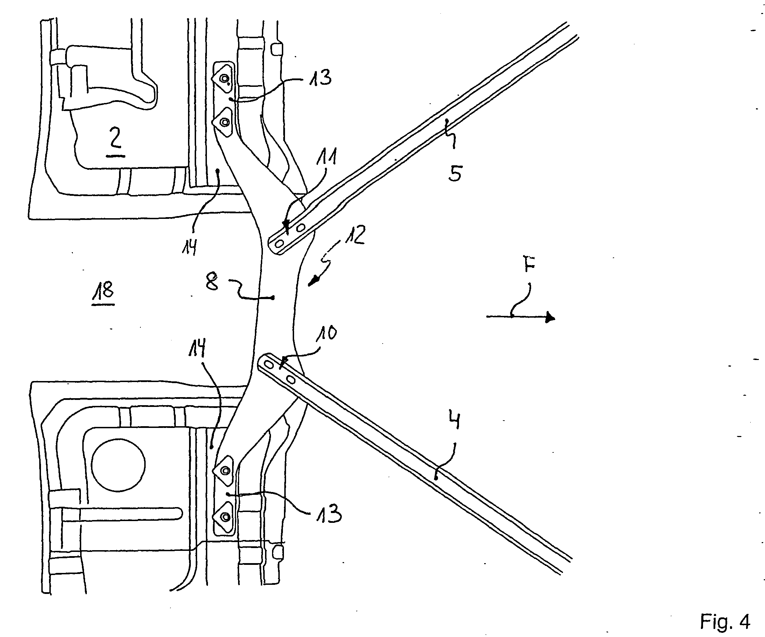

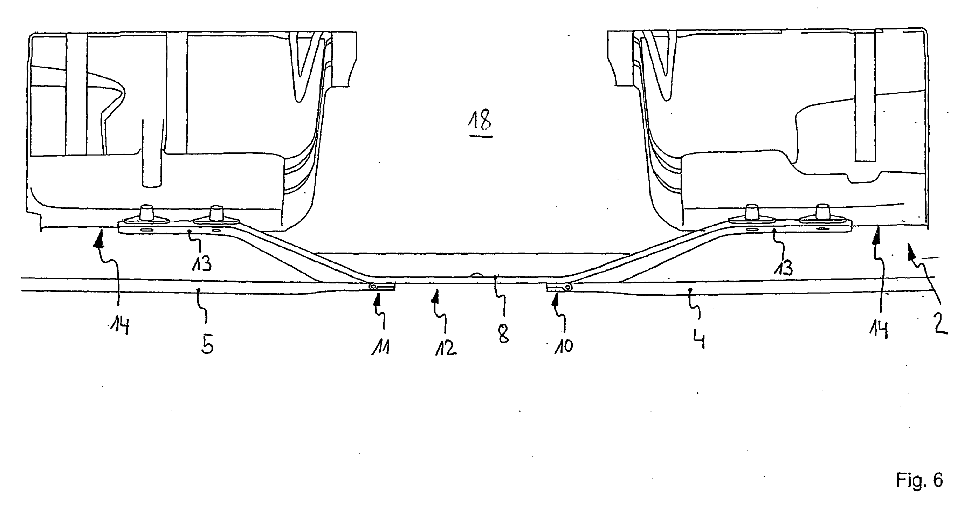

Die hinteren Enden 10, 11 der Streben 4, 5 sind hier an einer gemeinsamen Haltebrücke 12 befestigt, die im wesentlichen trapezförmig (Fig. 3, Fig. 6) mit zumindest einem oder wie hier zwei seitlich ausgreifenden Befestigungsflanschen 13 ausgebildet ist. Auch zwei zum Beispiel hintereinander liegende einzelne Haltebrücken für jede der Streben 4, 5 - nicht gezeichnet - sind möglich. Die oder jede Haltebrücke 12 kann von einem abgewinkelten Flacheisen gebildet sein. Es umfaßt hier im mittleren Bereich 8 eine zusätzliche Verstärkung 14 zur Stabilitätsverbesserung. Die Haltebrücke 12 ist mit den seitlichen Befestigungsflanschen 13 an im wesentlichen horizontalen Flächen 14 des Unterbodens 2 befestigt, hier verschraubt. Je nach Ausbildung kann auch eine Festlegung einer Haltebrücke über nur einen Befestigungsflansch 13 möglich sein. Im Ausführungsbeispiel liegen in Ansicht von unten (Fig. 4) die Befestigungsflansche 13 hinter dem mittleren Bereich 8 der Haltebrücke 12, so daß von dieser mit den Streben 4, 5 ein nahezu X-förmiger und damit für die Torsionssteifigkeit des Fahrzeugs 1 besonders günstiger Gesamtverlauf gebildet ist.

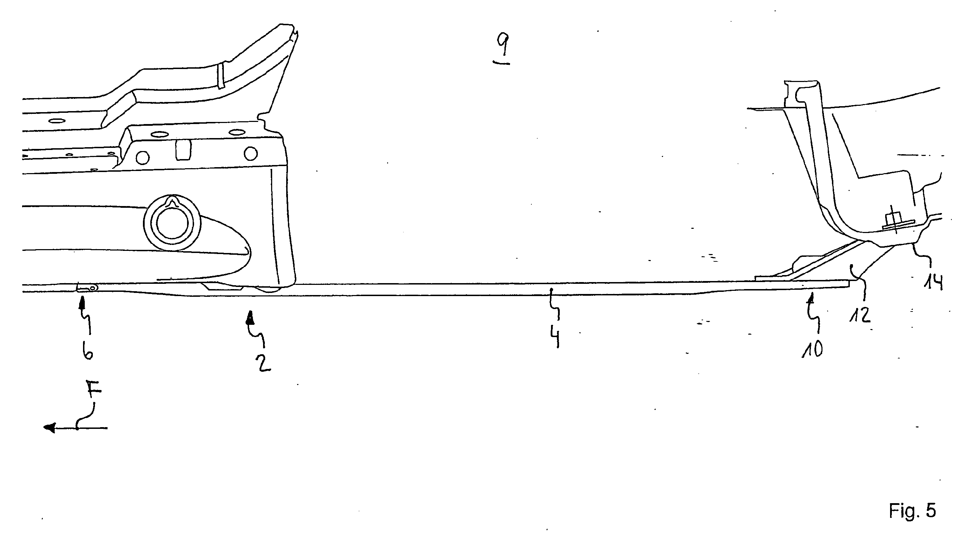

In jedem Fall untergreift die Haltebrücke 12 einen Teil einer Abgasanlage 15, hier einen Endschalldämpfer 16, der zwei Auspuffrohren 17 vorgeordnet ist. Der Endschalldämpfer ist in einem nach oben in den Unterboden 2 ragenden Kanal 18 angeordnet und kann im wesentlichen fahrzeugquermittig liegen. Die Haltebrücke 12 kann mit ihrem mittleren Bereich mehrere Zentimeter unterhalb des Endschalldämpfers 16 verlaufen und somit auch bei relativ hoch liegenden Befestigungsflächen 14 einen horizontalen Verlauf der Streben 4, 5 von ihren hinteren Enden 10, 11 zu ihren vorderen Enden 6, 7 ermöglichen (Fig. 5). Eine Arbeit an Teilen der Abgasanlage 15 kann ohne Demontage der Haltebrücke 12 möglich sein. Die Streben 4, 5 können an der Haltebrücke 12 verschraubt oder andersartig befestigt sein. Eine Verschraubung ermöglicht für eventuelle Reparatur- und insbesondere Austauschanforderungen etwa des Endschalldämpfers 16 mit fest daran angeordnetem Abgasrohr ein einfaches Lösen und Wiederbefestigen der Streben 4, 5.

Die Streben 4, 5 der Karosserie können nicht nur als herkömmliche Aussteifungsbauteile, sondern auch - nicht gezeichnet - als adaptive Schwingungsdämpfer dienen, d. h., daß sie neben der passiven Aussteifungsfunktion auch eine aktive Beeinflussung des Schwingungsverhaltens der Karosserie ermöglichen.

Hierzu können die Streben 4, 5 jeweils mehrteilig ausgebildet sein und etwa über Piezokristalle sowohl eine Längenänderung der Streben 4, 5 detektieren als auch dieser mit kurzer Ansprechzeit aktiv entgegenwirken. Auch können die Streben 4, 5 gemeinsam an einer Trageinrichtung gehalten sein, die ihrerseits an der Haltebrücke 12 beweglich gehalten ist und beispielsweise einen als Waagebalken ausgebildeten Querlenker umfaßt, der um eine zumindest nahezu vertikale Achse gegenüber der Haltebrücke 12 schwenkbar ist.

Die Trageinrichtung ist in ihrer Schwenkbewegung um die vertikale Achse von einem Stellglied, häufig auch als Aktuator bezeichnet, beeinflußbar, das einenends mit der Haltebrücke 12 und anderenends mit dem Waagebalken der Trageinrichtung exzentrisch und mit einem Abstand zu dessen Achse verbunden sein kann. Die Strebenenden 10, 11 können dann an den äußeren Enden des Waagebalkens angelenkt sein.

Zur Ansteuerung des Aktuators und damit Auslenkung des Waagebalkens aus seiner Normalposition dient eine Aufnahmeeinheit, die bei einer Anregung einer äußeren Schwingung, etwa durch Überfahren eines Schlaglochs oder einer Schwelle, eine Verwindung der Karosserie detektiert, da zumindest in eine der Streben 4, 5 gegenüber der jeweils anderen eine Zug- oder Druckkraft über ihr karosserieseitig festgelegtes Ende 6, 7 eingeleitet wird. Das jeweils gegenüberliegende Ende 10, 11 ist dadurch bestrebt, den Waagebalken entsprechend mitzunehmen und um seine Achse auszulenken.

Diese Auslenkneigung wird von der Aufnahmeeinheit, die beispielsweise Druck-Spannungs-Wandler enthält, erfaßt und in ein elektrisches Signal für den Aktuator umgesetzt, der dem durch die äußere Kraft eingeleiteten Drehmoment auf die Trageinrichtung entgegenwirkt. Durch diese Auslenkung werden die beiden Streben 4, 5 gegenphasig zueinander mit Druck und Zug beaufschlagt. Beide Streben 4, 5 steifen dadurch gleichzeitig die Karosserie aus und bewirken eine aktive Dämpfung. Damit wird die Wirkung der äußeren Anregung nahezu ausgelöscht. Stellglied und Aufnahmeeinheit haben sehr kurze Ansprechzeiten, so daß Anregungsfrequenzen von einigen Hz bis zu einigen 10 Hz effektiv entgegengewirkt werden kann.

## Patentansprüche

1. Kraftfahrzeug (1), insbesondere Cabriolet-Fahrzeug, mit einer Fahrzeugkarosserie, deren Unterbodenbereich (2) aussteifende und mit ihren vorderen Enden an der Fahrzeugkarosserie festgelegte Streben (4;5) zugeordnet sind,
**gekennzeichnet durch**
zumindest eine am Unterboden (2) mittelbar oder unmittelbar angeordnete und einen Teil einer Abgasanlage (15) untergreifende Haltebrücke (12) zur Festlegung von zumindest einer der Streben (4;5), wobei die Haltebrücke (12) bezüglich der Fahrtrichtung (F) hinter hinteren Radhäusern gelegen ist und zur Halterung der Streben (4;5) einen mittleren Bereich (8) sowie zu ihrer eigenen Festlegung an der Karosserie zumindest einen Befestigungsflansch (13) aufweist, der hinter dem mittleren Bereich (8) gelegen ist.

2. Kraftfahrzeug (1) nach Anspruch 1,
**dadurch gekennzeichnet,**
**daß** die Haltebrücke (12) zwei Befestigungsflansche (13) umfaßt und von diesen mit den Streben (4;5) ein nahezu x-förmiger Gesamtverlauf gebildet ist.

3. Kraftfahrzeug (1) nach einem der Ansprüche 1 oder 2,
**dadurch gekennzeichnet,**
**daß** die Haltebrücke (12) einen im wesentlichen in einer Fahrzeugquermitte angeordneten Endschalldämpfer (16) untergreift.

4. Kraftfahrzeug (1) nach einem der Ansprüche 1 bis 3,
**dadurch gekennzeichnet,**
**daß** an der Haltebrücke (12) hintere Endbereiche (10;11) von genau zwei Streben (4;5) festlegbar sind, die sich von dort aus mit einer Komponente in Fahrtrichtung (F) erstrecken und an ihren vorderen Enden (6;7) an der Karosserie festgelegt sind.

5. Kraftfahrzeug (1) nach einem der Ansprüche 1 bis 4,
**dadurch gekennzeichnet,**
**daß** die Haltebrücke (12) mit einem Vertikalabstand von mehreren Zentimetern unterhalb des untergriffenen Teils (16) der Abgasanlage (15) liegt.

6. Kraftfahrzeug (1) nach einem der Ansprüche 1 bis 5,
**dadurch gekennzeichnet,**
**daß** die Streben (4;5) an der Haltebrücke (12) über Schraubverbindungen festlegbar sind.

7. Kraftfahrzeug (1) nach einem der Ansprüche 1 bis 6,
**dadurch gekennzeichnet,**
**daß** die Haltebrücke (12) über Schraubverbindungen an der Karosserie festlegbar ist.

8. Kraftfahrzeug (1) nach einem der Ansprüche 1 bis 7,
**dadurch gekennzeichnet,**
**daß** die Karosserie einen nach oben in den Unterboden (2) ragenden Kanal (18) für die Abgasanlage (15) und beidseits gegenüber diesem tiefer liegende Bereiche (14) der Karosserie als Befestigungsflächen für die Haltebrücke (12) aufweist.

9. Kraftfahrzeug (1) nach einem der Ansprüche 1 bis 8,
**dadurch gekennzeichnet,**
**daß** diesem zumindest eine schwingungsselektive Aufnahmeeinheit zur Erfassung von im Fahrbetrieb auftretenden Längsbeanspruchungen der Streben (4;5) und zumindest ein Stellglied zum Bewirken einer der Längsbeanspruchung entgegenwirkenden Kraft zugeordnet ist,

10. Kraftfahrzeug (1) nach Anspruch 9,
**dadurch gekennzeichnet,**
**daß** zumindest zwei Streben (4;5) über eine gegenüber der Haltebrücke (12) beweglich gehaltene Trageinrichtung verbunden sind, der ein gemeinsames Stellglied zur gleichzeitigen Beeinflussung von damit verbundenen Streben (4; 5) zugeordnet ist.

11. Kraftfahrzeug (1) nach einem der Ansprüche 9 oder 10,
**dadurch gekennzeichnet,**
**daß** die Trageinrichtung zumindest einen nach Art eines Waagebalkens ausgebildeten Lenker umfaßt, der in seinem mittleren Bereich um eine zumindest nahezu vertikale Achse gegenüber der Haltebrücke (12) schwenkbar ist und der an seinen Endbereichen mit Streben (4;5) verbunden ist.

## Claims

1. A motor vehicle (1), in particular a cabriolet vehicle, with a vehicle body, there being associated with its underbody area (2) bracing struts (4; 5), which are fixed by their front ends to the car body,
**characterised by**
at least one holding bridge (12) which is arranged indirectly or directly at the underbody (2) and which underlies a part of an exhaust system (15), for fixing at least one of the struts (4; 5), whereby the holding bridge (12) is positioned behind the rear wheel housings with respect to the direction of travel (F) and, in order to hold the struts (4; 5), has a central area (8) and, for its own fixing to the car body, at least one securing flange (13) which is positioned behind the central area (8).

2. The motor vehicle (1) according to Claim 1,
**characterised in that**
the holding bridge (12) includes two securing flanges (13) and, from these, together with the struts (4; 5), an almost x-shaped overall course is formed.

3. The motor vehicle (1) according to one of Claims 1 or 2,
**characterised in that**
the holding bridge (12) underlies an end exhaust silencer (16) which is arranged substantially in a vehicle transverse centre.

4. The motor vehicle (1) according to one of Claims 1 to 3,
**characterised in that**
rear end areas (10; 11) of specifically two struts (4; 5) can be fixed at the holding bridge (12), which struts (4; 5) extend therefrom, with one component, in the vehicle direction (F) and are fixed at their front ends (6; 7) to the car body.

5. The motor vehicle (1) according to one of Claims 1 to 4,
**characterised in that**
the holding bridge (12) is situated under the part (16) of the exhaust system (15) which is underlaid, with a vertical spacing of several centimetres.

6. The motor vehicle (1) according to Claims 1 to 5,
**characterised in that**
the struts (4; 5) can be fixed to the holding bridge (12) using screw connections.

7. The motor vehicle (1) according to one of Claims 1 to 6,
**characterised in that**
the holding bridge (12) can be fixed to the car body using screw connections.

8. The motor vehicle (1) according to one of Claims 1 to 7,
**characterised in that**
the car body has a channel (18) for the exhaust system (15) which projects upwardly into the underbody (2) and lower-lying areas (14) with respect to this, of the car body, which appear on both sides and which act as securing surfaces for the holding bridge (12).

9. The motor vehicle (1) according to one of Claims 1 to 8,
**characterised in that**
at least one vibration-selective absorption unit for receiving the longitudinal stresses of the struts (4; 5) occurring during drive operation and at least one actuating member for generating a force acting against the longitudinal stress are associated with it.

10. The motor vehicle (1) according to Claim 9,
**characterised in that**
at least two struts (4; 5) are connected via a bearing apparatus which is movably held with respect to the holding bridge (12), and with which there is associated a common actuating member for the simultaneous manipulation of struts (4; 5) which are connected with it.

11. The motor vehicle (1) according to one of Claims 9 or 10,
**characterised in that**
the bearing apparatus includes at least one guide formed in the manner of a balance arm, which guide is pivotable in its central area, with respect to the holding bridge (12), around an axis which is at least almost vertical, and which guide Is connected at its end areas with struts (4; 5).

## Revendications

1. Véhicule automobile (1), notamment véhicule cabriolet, comprenant une carrosserie de véhicule, dont la région du dessous de caisse (2) présente des entretoises de renfort (4 ; 5) fixées par leurs extrémités avant à la carrosserie du véhicule,
**caractérisé par**
au moins un pont de fixation (12) disposé directement ou indirectement au dessous de caisse (2) et venant en prise par le dessous avec une partie d'une installation de gaz d'échappement (15), pour la fixation d'au moins l'une des entretoises (4 ; 5), le pont de fixation (12) étant placé par rapport à la direction de conduite (F) derrière les passages de roue arrière et présentant, pour la fixation des entretoises (4 ; 5), une région centrale (8) ainsi qu'au moins une bride de fixation (13) pour sa propre fixation à la carrosserie, laquelle est placée derrière la région centrale (8).

2. Véhicule automobile (1) selon la revendication 1,
**caractérisé en ce que**
le pont de fixation (12) comprend deux brides de fixation (13) qui forment avec les entretoises (4 ; 5) un pourtour global approximativement en forme de X.

3. Véhicule automobile (1) selon l'une quelconque des revendications 1 ou 2,
**caractérisé en ce que**
le pont de fixation (12) vient en prise par le dessous avec un silencieux (16) disposé essentiellement au milieu transversal du véhicule.

4. Véhicule automobile (1) selon l'une quelconque des revendications 1 à 3,
**caractérisé en ce que**
des régions d'extrémité arrière (10 ; 11) d'exactement deux entretoises (4 ; 5) peuvent être fixées sur le pont de fixation (12), lesquelles s'étendent de là avec une composante dans la direction de conduite (F) et sont fixées par leurs extrémités avant (6 ; 7) à la carrosserie.

5. Véhicule automobile (1) selon l'une quelconque des revendications 1 à 4,
**caractérisé en ce que**
le pont de fixation (12) se situe à une distance verticale de plusieurs centimètres en dessous de la partie (16) de l'installation de gaz d'échappement (15) engagée par le dessous.

6. Véhicule automobile (1) selon l'une quelconque des revendications 1 à 5,
**caractérisé en ce que**
les entretoises (4 ; 5) peuvent être fixées au pont de fixation (12) par le biais de connexions vissées.

7. Véhicule automobile (1) selon l'une quelconque des revendications 1 à 6,
**caractérisé en ce que**
le pont de fixation (12) peut être fixé à la carrosserie par le biais de connexions vissées.

8. Véhicule automobile (1) selon l'une quelconque des revendications 1 à 7,
**caractérisé en ce que**
la carrosserie présente un canal (18) pénétrant vers le haut dans le dessous de caisse (2) pour l'installation de gaz d'échappement (15), et de part et d'autre de celui-ci, des régions de la carrosserie situées plus profondément (14) que les surfaces de fixation pour le pont de fixation (12).

9. Véhicule automobile (1) selon l'une quelconque des revendications 1 à 8,
**caractérisé en ce que**
l'on associe à celui-ci au moins une unité d'enregistrement sélective vis-à-vis des oscillations, pour la détection de contraintes longitudinales des entretoises (4 ; 5) se produisant pendant la conduite, et au moins un actionneur pour amorcer une force opposée à la contrainte longitudinale.

10. Véhicule automobile (1) selon la revendication 9,
**caractérisé en ce que**
au moins deux entretoises (4 ; 5) sont connectées par le biais d'un dispositif de support maintenu mobile par rapport au pont de fixation (12), auquel dispositif de support est associé un actionneur commun pour influencer simultanément les entretoises (4 ; 5) connectées par celui-ci.

11. Véhicule automobile (1) selon l'une quelconque des revendications 9 ou 10,
**caractérisé en ce que**
le dispositif de support comprend au moins un bras oscillant réalisé comme un fléau de balance, qui peut pivoter dans sa région centrale autour d'un axe au moins sensiblement vertical par rapport au pont de fixation (12) et qui est connecté aux entretoises (4 ; 5) par ses régions d'extrémité.
